Europäisches Patentamt

European Patent Office

Office européen des brevets

(19)

(11) Veröffentlichungsnummer: **0 275 532 B1**

(12) # EUROPÄISCHE PATENTSCHRIFT

(45) Veröffentlichungstag der Patentschrift: **29.07.92**

(51) Int. Cl.5: **G02B 26/10**

(21) Anmeldenummer: **87119038.5**

(22) Anmeldetag: **22.12.87**

(54) **Optisch-mechanischer Ablenker.**

(30) Priorität: **23.12.86 DE 3644124**

(43) Veröffentlichungstag der Anmeldung:
**27.07.88 Patentblatt 88/30**

(45) Bekanntmachung des Hinweises auf die
Patenterteilung:
**29.07.92 Patentblatt 92/31**

(84) Benannte Vertragsstaaten:
**AT CH DE GB LI**

(56) Entgegenhaltungen:
**EP-A- 0 152 882**
**DE-A- 1 302 732**
**FR-A- 2 352 314**
**US-A- 3 198 951**
**US-A- 4 512 625**

**PATENT ABSTRACTS OF JAPAN, Band 9, Nr.
137 (P-363) [1860], 12. Juni 1985 & JP-A-60 19
117 (NIPPON DENKI K.K.) 31-01-1985**

(73) Patentinhaber: **Linotype AG**
**Mergenthaler Allee 55-75**
**W-6236 Eschborn(DE)**

(72) Erfinder: **Plaot, Michael**
**Hamburger Strasse 36**
**D-6236 Eschborn(DE)**

(74) Vertreter: **Schubert, Siegmar, Dipl.-Ing. et al
Dipl.-Ing. G.Dannenberg Dr. P. Weinhold Dr.
D. Gudel Dipl.-Ing. S. Schubert Dr. P. Barz
Grosse Eschenheimer Strasse 39
W-6000 Frankfurt am Main 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen optisch-mechanischen Ablenker nach dem Oberbegriff des Anspruchs 1.

Ein derartiger bekannter optisch-mechanischer Ablenker wird insbesondere in einem typografischen Setzgerät verwendet, um typografische Schriftzeichen in eine plane Fläche, die lichtempfindliche Filmebene, entlang Ablenkzeilen zu projizieren. Das typografische Setzgerät mit dem optisch-mechanischen Ablenker der eingangs genannten Gattung projiziert ein auf den drehbaren (Abtast-)Spiegel einfallendes Strahlenbündel auf die ebene Bildfläche, wobei die Beziehung zwischen einem Ablenkwinkel des Strahlenbündels an dem drehbaren Spiegel und der Position des in eine Ablenkzeile projizierten Strahlenbündels durch die Optik zwischen dem drehbaren Spiegel und der ebenen Bildfläche linearisiert wird (DE-PS 34 04 407). Im einzelnen umfaßt diese Optik in der Nähe des drehbaren Spiegels die plan-konvexe Linse mit einer dem drehbaren Spiegel zugewandten, annähernd planen Fläche und einer zweiten, der Ablenkebene bzw. der ebenen Bildfläche zugewandten sphärisch-konvexen Fläche sowie im Anschluß daran den feldebnenden Hohlspiegel. Eine sphärisch reflektierende Fläche des Hohlspiegels ist auf die ebene Bildfläche gerichtet. - Dem drehbaren Spiegel vorgeschaltet können im Strahlengang eine Objektivlinse und eine Zerstreuungslinse sein, die unter anderem zu einer Vorkorrektur der sphärischen Aberration des Ablenksystems dienen sollen. Ausgehend von einer Zwischenbildebene, in welche ein Bildpunkt eines Schriftzeichens projiziert werden kann, verläuft das Strahlenbündel durch die Zerstreuungslinse, die Objektivlinse sowie vorzugsweise durch die sphärisch-konvexe Fläche der plan-konvexen Linse und tritt aus deren planer Fläche als Bündel kollimierten Lichts aus. Dieses trifft auf die drehbare spiegelnde Fläche und wird entsprechend der Drehstellung in die plan-konvexe Linse zurückgespiegelt, um letztlich in die Ablenkzeile projiziert zu werden. Die plane Fläche der plan-konvexen Linse reduziert dabei den zur Auslenkung der Position des in der Ablenkzeile projizierten Schriftzeichens benötigten Ablenkwinkel des drehbaren Spiegels. Diese Reduktion erfolgt im wesentlichen durch Brechung an der planen Fläche der plan-konvexen Linse. Das durch diese Linse verlaufende Strahlenbündel wird dann bei seinem Austritt an deren sphärisch-konvexer Fläche im wesentlichen in die Position in der Ablenkzeile fokussiert, d.h. weitere optische Elemente des Ablenksystems tragen korrigierend zur Fokussierung bei. - Die Bedingung, daß es sich bei der plan-konvexen Einzellinse um eine aplanatische handelt, führt zu einer relativ starken Glasdicke dieser Einzellinse. -

Mit diesem optisch-mechanischen Ablenker und den zusätzlichen Linsen, insbesondere der Zerstreuungslinse, wird im Eintrittsstrahlengang eine sehr gute Linearität zwischen dem Ablenkwinkel bzw. der Drehstellung des drehbaren Spiegels und der Projektionsposition in der ebenen Bildfläche erzielt, wenn der Ablenkwinkel des drehbaren Spiegels nicht zu groß ist bzw. die Ablenkzeile bei gegebener Brennweite der plan-konvexen Linse nicht zu lang ist. Bei besonders langen Ablenkzeilen kann jedoch die unvermeidbare Aberration des in der Nähe der Bildebene angeordneten größeren Hohlspiegels für hohe Qualitätsansprüche störend sein.

Der Erfindung liegt daher die Aufgabe zugrunde, diese Aberration des Hohlspiegels in einem optisch-mechanischen Ablenkersystem der eingangs genannten Gattung insbesondere bei langen Ablenkzeilen noch besser zu korrigieren.

Diese Aufgabe wird durch die Ausbildung des optisch-mechanischen Ablenkers mit den in dem kennzeichnenden Teil des Anspruchs 1 angegebenen Merkmalen gelöst.

Das sich an den dreh- oder schwenkbaren (Abtast-)Spiegel anschließende optische System hat somit zwei Hauptelemente, nämlich außer der ersten plan-konvexen aplanatischen Linse einen ersten konkaven Aplanaten. (Mit "Aplanat" wird dabei eine insbesondere die sphärische Aberration verringernde Linsenkombination bezeichnet.) Die annähernd plane Fläche der zweiten plan-konvexen Linse, die zu dem konkaven Aplanaten gehört, ist dem drehbaren Spiegel zugewandt. Diese zweite plan-konvexe Linse besteht aus einem Glas mit möglichst niedrigem Brechungsindex, welcher das hohe Nutzverhältnis bestimmt. Diese zweite plan-konvexe Linse besteht aus einem Glas mit einem möglichst kleinen Brechungsindex, der einen hohen Brechungsindexunterschied zwischen der plan-konvexen Linse und der plan-konkaven Linse ergibt, welche beide zusammen das konkave aplanatische System bilden. Dieser Brechungsindexunterschied bestimmt die Erhöhung der numerischen Apertur durch das aplanatische System und damit eine Aperturverringerung des drehbaren Spiegels. Je kleiner die Apertur des drehbaren Spiegels ist, um so größer wird der mögliche Ablenkwinkel ohne Aperturverschlechterung durch den drehbaren Spiegel. Deswegen hat bei einer gegebenen Größe des drehbaren Spiegels ein größerer Brechungsindexunterschied ein höheres Nutzverhältnis zur Folge. Das Nutzverhältnis ist dabei definiert als Differenz der Zeit zum überstreichen der Ablenkzeilenlänge mit dem drehbaren Spiegel bzw. einer Facette eines Polygons minus der nicht nutzbaren Totzeit beim Übergang zwischen zwei Spiegelflächen bzw. zweier Facetten, bezogen auf die Zeit zum überstreichen der Ablenkzeilenlänge mit einer Spiegelfläche bzw. Facette.

Ein Bereich geeigneter Brechungsindizes der ersten plan-konvexen Linse erstreckt sich von 1,6 - 1,95. Bevorzugt ist 1,68.

Ein Bereich geeigneter Brechungsindizes der zweiten plan-konvexen Linse erstreckt sich von 1,45 - 1,55. Bevorzugt ist 1,51.

Die dem Abtastspiegel abgewandte rückseitige Oberfläche der zweiten plan-konvexen Linse weist einen kleinsten Radius auf, der entsprechend den optischen Randbedingungen gewählt ist. Die konkave Fläche der plan-konkaven Linse schmiegt sich dabei an die konvexe Fläche der zweiten plan-konvexen Linse an. Insgesamt projiziert der erste konkave Aplanat, der aus der plan-konkaven Linse und der zweiten plan-konvexen Linse besteht, ein Bild eines Gegenstands (Schriftzeichen-Laserpunkt), welcher sich optisch im Unendlichen befindet, in einen virtuellen, der planen Fläche der zweiten plan-konvexen Linse nahen Punkt. Dieser Punkt liegt somit auf der gleichen Seite, von der her das Strahlenbündel von dem im Unendlichen liegenden Gegenstandspunkt auf die plane Fläche trifft. Durch die Komposition der plan-konvexen Linse und der plan-konkaven Linse, die den ersten konkaven Aplanaten bilden sowie der ersten plan-konvexen Linse wird die Aberration in den Randbereichen des Hohlspiegels herabgesetzt.

Der erfindungsgemäße optisch-mechanische Ablenker hat weiter den Vorteil, daß der Eingangswinkel an der planen Fläche der zweiten plankonvexen Linse an dem konkaven Aplanaten in einem größeren Bereich gewählt werden kann, da dieses System mehr Korrekturmöglichkeiten zum Gewährleisten einer hohen Abbildungsqualität zuläßt.

Beispielsweise ist ein typischer Eingangswinkel bei einem bekannten Ablenker 37°, während nach der vorliegenden Erfindung z.B. 43° erreicht werden.

Die erste plan-konvexe Linse, welche ein Hauptelement des optisch-mechanischen Ablenkers bildet, ist bezüglich des Bildes, das von dem virtuellen Nahpunkt aus projiziert wird, aplanatisch.

Der von dem ersten konkaven Aplanaten gebildete virtuelle nahe Punkt wird durch die erste plankonvexe Linse als gekrümmte Linie hinter den Hohlspiegel fokussiert, der wiederum die gekrümmte Linie als gerade Ablenkzeile in die ebene Bildfläche projiziert. - Die erste plan-konvexe Linse soll ungefähr den gleichen Brechungsindex wie die plan-konkave Linse des ersten Aplanaten aufweisen, um die gesamte Brennweite des Systems gering zu halten und den sich auf den drehbaren Spiegel auswirkenden optischen Hebelarm zu reduzieren.

Um die Glasdicke der ein Hauptelement bildenden ersten plan-konvexen Linse herabzusetzen, wodurch ein Fertigungsvorteil erzielt wird, und eine hohe Genauigkeit der gekrümmten Linie zu erzielen, in welche die erste plan-konvexe Linse den nahen Punkt fokussiert, ist vorteilhaft mit der planen Fläche der ersten plan-konvexen Linse eine Glasplatte verkittet. Die Brechungsindizes der Glasplatte und der ersten plan-konvexen Linse können gleich sein. In anderen Ausführungen sind unterschiedliche Brechungsindizes als Konstruktionsmittel möglich.

Es wurden zwei Varianten der Glasplatte aufgefunden, die je nach den speziellen Erfordernissen vorteilhaft sind: In der ersten Variante weist die Glasplatte einen mittleren Brechungsindex auf, der in dem Bereich zwischen demjenigen der zweiten plan-konvexen Linse und demjenigen der ersten plan-konvexen Linse liegt. Vgl. hierzu auch die weiter oben angegebenen Wertebereiche der Brechungsindizes der ersten und der zweiten plankonvexen Linse. Die Glasplatte ist mit der planen Fläche der plan-konkaven Linse des ersten Aplanaten in diesem Fall verkittet.

In einer zweiten Variante, in der ein Luftspalt zwichen der Glasplatte und der planen Fläche der plan-konkaven Linse des ersten aplanatischen Systems vorgesehen ist, weist die Glasplatte einen hohen Brechungsindex auf ,der höher als derjenige der ersten plan-konvexen Linse ist.

Die Erfindung wird im folgenden anhand einer Zeichnung mit zwei Figuren erläutert. Es zeigen:

Fig. 1 eine schaubildliche vereinfachte Darstellung eines typografischen Setzgeräts mit dem optisch-mechanischen Ablenker in einer ersten Ausführungsform und

Fig. 2 einen Schnitt durch einen optisch-mechanischen Ablenker in einer zweiten Ausführungsform, die im Vergleich zu derjenigen nach Fig. 1 größer dargestellt ist.

In beiden Figuren sind überreichstimmende Teile mit gleichen Bezugszeichen versehen.

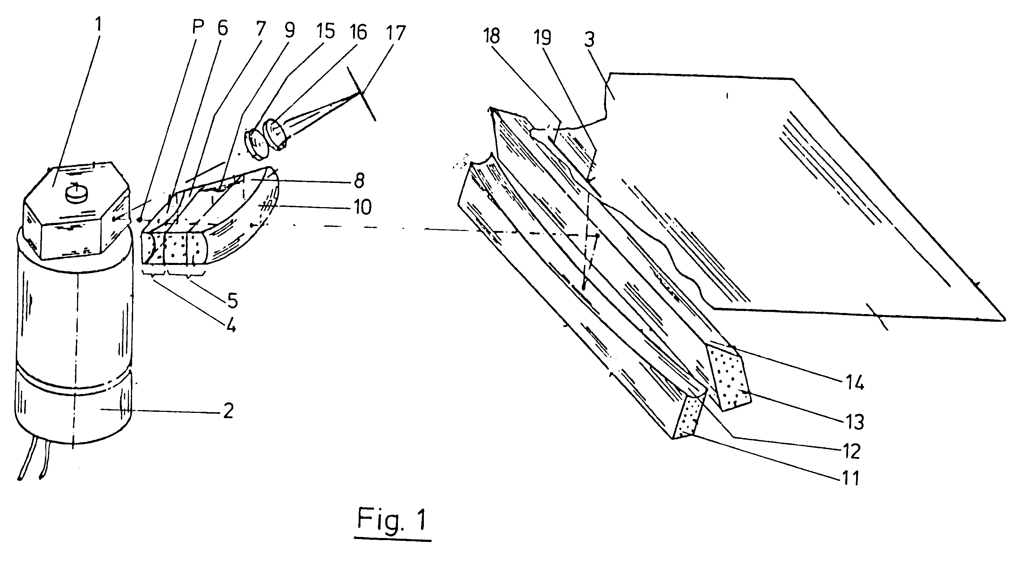

In Fig. 1 ist mit 1 ein Polygon bezeichnet, welches als drehbare Fläche sechs Facetten aufweist. Die Drehachse ist strichpunktiert angedeutet und trägt das Bezugszeichen 2. In dem Strahlengang zwischen dem Polygon 1 und einer planen Bildebene 3, die als lichtempfindlicher Film ausgebildet ist, befinden sich zwei miteinander verkittete Aplanate 4 und 5. Diese Aplanate bilden die Hauptelemente des optischen Systems.

Der erste, konkave Aplanat 4 besteht aus einer ersten plan-konvexen Linse 6 und einer mit deren konvexer Seite verkitteten plan-konkaven Linse 7.

Der zweite, konvexe Aplanat 5 umfaßt eine aplanatische plan-konvexe Linse 8 sowie - mit deren planer Seite verkittet - eine plane Glasplatte 9. Die der plan-konvexen Linse 8 gegenüberliegende plane Seite der Glasplatte 9 ist mit der planen Fläche der plan-konkaven Linse 7 verkittet.

Die plan-konvexe Linse 8 besteht aus einem Glas mit einem hohen Brechungsindex, ebenso die plan-konkave Linse 7. Die plan-konvexe Linse 6 besteht hingegen aus einem Glas eines gegenüber dem Brechungsindex der plan-konkaven Linse 7 wesentliche niedrigeren Brechungsindexes. Die Glasplatte 9 hat einen mittleren Brechungsindex.

Sämtliche Linsen 6, 7, 8 des Blocks, der auch die Glasplatte 9 einschließt, sind sphärisch.

An die sphärisch konvexe Austrittsfläche 10 des Aplanaten 5 schließt sich im weiteren Verlauf des Strahlengangs zwischen diesem Aplanaten und der Bildebene ein Umlenkzeilenspiegel 13 mit einer ebenen reflektierenden Fläche 14 an, welcher die Ablenkebene auf eine sphärische reflektierende Fläche 12 eines feldebenen Spiegels 11 reflektiert. Die sphärische reflektierende Fläche 12 ist auf die Ablenkebene gerichtet.

Dieser Anordnung sind im Eingangsstrahlengang vor dem Polygon noch eine Objektivlinse 15 und eine Zerstreuungslinse 16 vorgeschaltet, die unter anderem zu einer Vorkorrektur der sphärischen Aberration des Ablenksystems dienen. Eine Zwischenbildebene, in welche die Schriftzeichen-Laserpunkte mit einem dünnen parallelen Laserstrahlenbündel projiziert werden, ist mit 17 bezeichnet.

Ausgehend von der Zwischenbildebene 17 verläuft das Laserstrahlenbündel also über die Zerstreuungslinse 16, die Objektivlinse 15 und das Poylgon 1 in den konkaven Aplanaten 4. Der konkave Aplanat projiziert das Bild des Schriftzeichen-Laserpunkts in einen virtuellen nahen Punkt P. Der Punkt P ist der virtuelle Ursprung für den Aplanaten 5.

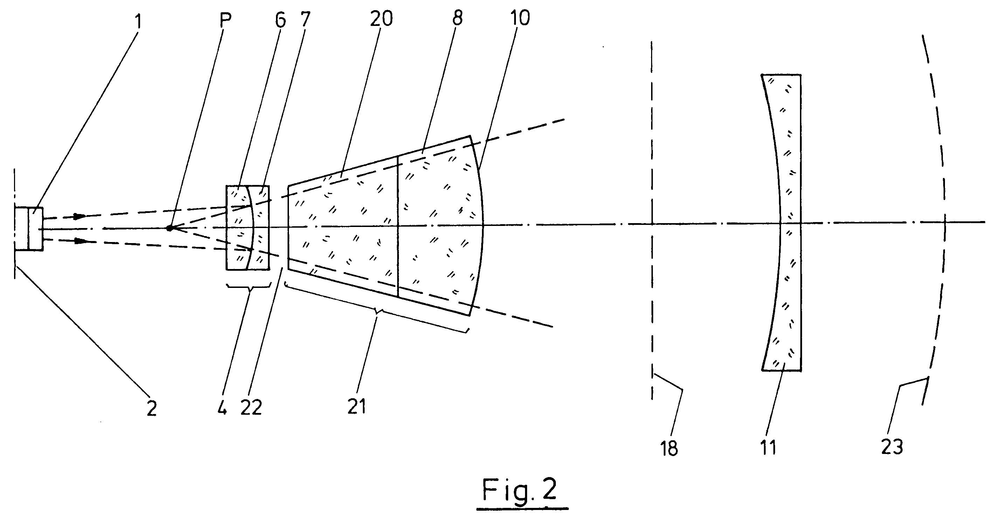

Die zu dem nahen Punkt P aplanatische plan-konvexe Linse 8 fokussiert den nahen Punkt P auf eine gekrümmte Linie 23 hinter dem feldebnenden Spiegel 11. Die gekrümmte Linie ist in Fig. 1 nicht dargestellt, wohl aber in Fig. 2.

Von dem feldebnenden Spiegel wird die gekrümmte Linie als gerade Ablenkzeile 18 projiziert, und zwar momentan in der Position 19 der Ablenkzeile.

Um die Glasstärke der plan-konvexen Linse 8 möglichst gering zu halten und die gewünschte Genauigkeit der mit dieser plan-konvexen Linse fokussierten gekrümmten Linie zu erzielen, ist der Zwischenraum zwischen der plan-konvexen Linse 8 und dem ersten Aplanaten 4 mit der Glasplatte 9 ausgefüllt. Der durch diese Glasplatte 9 verursachte Astigmatismus kann zweckmäßig durch Fokussierung des in das aus den Aplanaten gebildete System eingeleiteten Strahlenbündels erreicht werden, so daß dieser geringfügig von dem unendlichen wert abweicht. Ein verbleibender Betrag des Astigmatismus kann den Astigmatismus des Polygons 1 bzw. des Abtastspiegels kompensieren. Das Koma des Abtastspiegels wird durch ein entgegengesetztes Koma der ersten plan-konvexen Linse 8 kompensiert, indem die Einwirkung der aplanatischen Eigenschaften der beiden Aplanate auf die Austrittsoberfläche 10 der plan-konvexen Linse 9 entsprechend eingestellt werden.

Die zweite Variante des otpischen Systems gemäß Fig. 2 unterscheidet sich von dme oben beschriebenen optischen System nach Fig. 1 im wesentlichen dadurch, daß als Glasplatte 20 eine solche mit einem hohen Brechungsindex vorgesehen ist, die zwar einerseits mit der planen Fläche der plan-konvexen Linse 8 verkittet ist, andererseits aber einen Luftspalt 22 begrenzt, der zwischen der planen Fläche der Glasplatte 20 und der gegenüberliegenden planen Fläche der plan-konkaven Linse 7 des ersten Aplanaten 4 liegt. Die Wirkung der beiden Aplanate 4 und 21 bleibt jedoch grundsätzlich die gleiche wie diejenige der Aplanate 4 und 5. Insbesondere wird mit der plan-konvexen Linse 8 wiederum der nahe Punkt P, der durch den ersten Aplanaten 4 erzeugt wird, durch die plan-konvexe Linse 8 auf eine gekrümmte Linie 23 hinter dem feldebnenden Spiegel 11 fokussiert, so daß dieser feldebnende Spiegel die gekrümmte Linie als gerade Ablenkzeile 18 in die Bildebene projiziert.

**Patentansprüche**

1. Optisch-mechanischer Ablenker mit mindestens einem dreh- oder schwenkbaren Abtastspiegel (1), der von einem im wesentlichen parallelen Strahlenbündel getroffen wird, welches über eine in der Nähe des Abtastspiegels (1) angeordnete erste plankonvexe Linse (8), deren plane Fläche dem Abtastspiegel zugewandt ist und deren konvexe Fläche (10) von dem reflektierten Strahl im wesentlichen rechtwinklig durchstoßen wird, und einem nahe einer Bildebene angeordneten Hohlspiegel (11) auf einer ebenen Bildfläche fokussiert wird, **dadurch gekennzeichnet,** daß zwischen der ersten plan-konvexen Linse (8) und dem Abtastspiegel (1) ein erster Aplanat (4) angeordnet ist, und daß der erste Aplanat (4) sich zusammensetzt aus einer plankonkaven Linse (7), deren Brechungsindex im wesentlichen gleich dem Brechungsindex der ersten plan-konvexen Linse (8) ist, sowie einer mit der konkaven Fläche der plan-konkaven Linse (7) verkitteten zweiten plan-konvexen Linse (6), deren plane Fläche dem Abtastspiegel zugewandt ist und deren Brechungsindex wesentlich niedriger als derjenige der plankonkaven Linse (7) ist.

**2.** Optisch-mechanischer Ablenker nach Anspruch 1,
**dadurch gekennzeichnet,**
daß sich der Bereich der Brechungsindizes der ersten plan-konvexen Linse von 1,6 bis 1,95 erstreckt und der Bereich der Brechungsindizes der zweiten plan-konvexen Linse von 1,45 bis 1,55.

**3.** Optisch-mechanischer Ablenker nach Anspruch 2,
**dadurch gekennzeichnet,**
daß der Brechungsindex der ersten plan-konvexen Linse 1,68 beträgt.

**4.** Optisch-mechanischer Ablenker nach Anspruch 2 oder 3,
**dadurch gekennzeichnet,**
daß der Brechungsindex der zweiten plan-konvexen Linse 1,51 ist.

**5.** Optisch-mechanischer Ablenker nach einem der Ansprüche 1 - 4,
**dadurch gekennzeichnet,**
daß zwischen der plan-konkaven Linse (7) und der ersten plan-konvexen Linse (8) eine Glasplatte (9) angeordnet ist, die mit der planen Fläche der ersten plan-konvexen Linse verkittet ist.

**6.** Optisch-mechanischer Ablenker nach Anspruch 5,
**dadurch gekennzeichnet,**
daß die Glasplatte (20) einen hohen Brechungsindex aufweist, der mindestens so hoch wie derjenige der ersten plan-konvexen Linse (8) ist, und daß zwischen der Glasplatte (20) und der planen Fläche der plan-konkaven Linse (7) des ersten Aplanaten (4) ein Luftspalt (22) vorgesehen ist.

**7.** Optisch-mechanischer Ablenker nach Anspruch 5,
**dadurch gekennzeichnet,**
daß die Glasplatte (9) einen mittleren Brechungsindex aufweist, der zwischen den ersten und den zweiten Brechungsindizes der ersten plan-konvexen Linse (8) und der zweiten plan-konvexen Linse (6) liegt, und daß die Glasplatte mit der planen Fläche der plan-konkaven Linse (7) des ersten Aplanaten (4) verkittet ist.

**Claims**

**1.** An opto-mechanical deflector having at least one rotatable or orientable scanning mirror (1), which is struck by a substantially parallel bundle of rays, which is focussed on a flat image plane via a first planoconvex lens (8) arranged in the vicinity of the scanning mirror (1), the plane face of which lens faces the scanning mirror, and the convex face (10) of which is penetrated by the reflected beam substantially at right-angles, and with a concave mirror (11) arranged close to an image plane,
characterised in that
between the first plano-convex lens (8) and the scanning mirror (1) a first aplanatic system (4) is arranged, and that the first aplanatic system (4) is composed of a plano-convex lens (7), the refractive index of which is substantially identical to the refractive index of the first plano-convex lens (8), and also of a second plano-convex lens (6) cemented with the concave face of the plano-concave lens (7), the plane face of which lens (6) faces the scanning mirror and the refractive index of which is substantially lower than that of the plano-convex lens (7).

**2.** An opto-mechanical deflector according to Claim 1,
characterised in that
the range of the refractive index of the first plano-convex lens extends from 1.6 to 1.95 and the range of the refractive index of the second plano-convex lens extends from 1.45 to 1.55.

**3.** An opto-mechanical deflector according to Claim 2,
characterised in that
the refractive index of the first plano-convex lens is 1.68.

**4.** An opto-mechanical deflector according to Claim 2 or 3,
characterised in that
the refractive index of the second plano-convex lens is 1.51.

**5.** An opto-mechanical deflector according to one of Claims 1- 4,
characterised in that
between the plano-convex lens (7) and the first plano-convex lens (8) a glass plate (9) is arranged, which is cemented with the plane face of the first plano-convex lens.

**6.** An opto-mechanical deflector according to Claim 5,
characterised in that
the glass plate (20) has a high refractive index, which is at least as high as that of the first plano-convex lens (8), and that between the glass plate (20) and the plane face of the plano-convex lens (7) of the first aplanatic system (4) an air gap (22) is provided.

7. An opto-mechanical deflector according to Claim 5,
characterised in that
the glass plate (9) has a mean refractive index, which lies between the first and the second refractive index of the first plano-convex lens (8) and the second plano-convex lens (6), and that the glass plate is cemented with the plane face of the plano-convex lens (7) of the first aplanatic system (4).

**Revendications**

1. Dispositif de balayage optomécanique, comportant au moins un miroir de balayage rotatif ou pivotant (1) sur lequel tombe un faisceau de rayons substantiellement parallèles qui est concentré sur une surface d'image plane par une première lentille plan-convexe (8), disposée près du miroir de balayage (1), la surface plane de cette première lentille plan-convexe étant tournée vers le miroir de balayage et sa surface convexe (10) étant traversée substantiellement perpendiculairement par le rayon réfléchi, et par un miroir concave (11) disposé près de la surface d'image plane, caractérisé en ce qu'un premier groupe aplanétique (4) est disposé entre la première lentille plan-convexe (8) et le miroir de balayage (1) et en ce que le premier groupe aplanétique (4) est composé d'une lentille plan-concave (7) dont l'indice de réfraction est substantiellement égal à l'indice de réfraction de la première lentille plan-convexe (8), et d'une seconde lentille plan-convexe (6) cimentée sur la surface concave de la lentille plan-concave (7), la surface plane de cette seconde lentille plan-convexe (6) étant tournée vers le miroir de balayage et l'indice de réfraction de cette seconde lentille étant considérablement plus bas que celui de la lentille plan-concave (7).

2. Dispositif de balayage optomécanique selon la revendication 1, caractérisé en ce que la gamme des indices de réfraction de la première lentille plan-convexe s'étend de 1,6 à 1,95 et la gamme des indices de réfraction de la seconde lentille plan-convexe s'étend de 1,45 à 1,55.

3. Dispositif de balayage optomécanique selon la revendication 2, caractérisé en ce que l'indice de réfraction de la première lentille plan-convexe est de 1,68.

4. Dispositif de balayage optomécanique selon la revendication 2 ou 3, caractérisé en ce que l'indice de réfraction de la seconde lentille plan-convexe est de 1,51.

5. Dispositif de balayage optomécanique selon une des revendications 1 à 4, caractérisé en ce qu'une plaque de verre (9) est disposée entre la lentille plan-concave (7) et la première lentille plan-convexe (8), cette plaque de verre (9) étant cimentée sur la surface plane de la première lentille plan-convexe.

6. Dispositif de balayage optomécanique selon la revendication 5, caractérisé en ce que la plaque de verre (20) possède un indice de réfraction élevé qui est au moins égal à celui de la première lentille plan-convexe (8), et en ce qu'un espace d'air (22) est prévu entre la plaque de verre (20) et la surface plane de la lentille plan-concave (7) du premier groupe aplanétique (4).

7. Dispositif de balayage optomécanique selon la revendication 5, caractérisé en ce que la plaque de verre (9) présente un indice de réfraction moyen qui se situe entre les premier et second indices de réfraction die la première lentille plan-convexe (8) et de la seconde lentille plan-convexe (6), et en ce que la plaque de verre est cimentée sur la surface plane de la lentille plan-concave (7) du premier groupe aplanétique (4).

Fig. 1

EP 0 275 532 B1

Fig.2